# EUROPÄISCHE PATENTSCHRIFT

(11) **EP 3 096 970 B1**
(45) Veröffentlichungstag und Bekanntmachung des Hinweises auf die Patenterteilung: **04.04.2018**
(21) Anmeldenummer: 14790513.7
(22) Anmeldetag: 23.10.2014
(51) Int. Cl.: B60L 3/04, B60L 3/12, H02H 3/04, H02P 29/02, B60W 20/00, G06F 11/07

(54) **VERFAHREN ZUM BETRIEB EINES HOCHSPANNUNGSNETZES EINES KRAFTFAHRZEUGS UND KRAFTFAHRZEUG**
METHOD FOR OPERATING A HIGH VOLTAGE NETWORK OF A MOTOR VEHICLE, AND MOTOR VEHICLE
PROCÉDÉ DE FONCTIONNEMENT D'UN RÉSEAU HAUTE TENSION D'UN VÉHICULE À MOTEUR ET VÉHICULE À MOTEUR

(30) Priorität: 21.01.2014 DE 102014000746
(43) Veröffentlichungstag der Anmeldung: 30.11.2016
(73) Patentinhaber: Audi AG, 85045 Ingolstadt (DE)
(72) Erfinder: JELINEK, Karl, 85092 Kösching (DE)
(74) Vertreter: Herbst, Matthias Heinz
(86) Internationale Anmeldenummer: PCT/EP2014/002866
(87) Internationale Veröffentlichungsnummer: WO 2015/110130

(56) Entgegenhaltungen:
- WO-A1-2012/097775
- DE-B4- 10 296 400
- JP-A- 2006 129 557
- JP-A- 2008 206 288
- US-B1- 6 215 261

## Beschreibung

Die Erfindung betrifft ein Verfahren zum Betrieb eines eine höhere Spannung als ein Niedrigspannungsnetz aufweisenden Hochspannungsnetzes eines Kraftfahrzeugs, wobei eine Hochspannungsnetzeinheit eines Steuergerätes des Kraftfahrzeugs verwendet wird, wobei die Hochspannungsnetzeinheit zur Steuerung des Betriebs des Hochspannungsnetzes vorgesehen ist. Daneben betrifft die Erfindung ein Kraftfahrzeug.

Vor verschiedensten Hintergründen wurde vorgeschlagen, in Kraftfahrzeugen auch Hochspannungsnetze vorzusehen, deren Spannung höher als die Spannung eines Niedrigspannungsnetzes des Kraftfahrzeugs, beispielsweise eines üblichen 12 V-Bordnetzes, liegt. Dabei seien vom Begriff des Hochspannungsnetzes im Rahmen der vorliegenden Beschreibung nicht nur die Leitungen umfasst, sondern auch die an das Hochspannungsnetz angeschlossenen Komponenten.

Hochspannungsnetze werden insbesondere häufig in Kraftfahrzeugen verwendet, in denen ein Elektromotor vorgesehen ist, beispielsweise also in Elektrokraftfahrzeugen und Hybridkraftfahrzeugen. Das Hochspannungsnetz umfasst dabei beispielsweise neben dem Elektromotor eine Hochspannungsbatterie sowie gegebenenfalls eine Ladeeinrichtung zum Laden der Hochspannungsbatterie und wenigstens einen weiteren Verbraucher, beispielsweise einen Klimakompressor oder dergleichen. Über einen Umrichter als Leistungselektronikkomponente kann das Hochspannungsnetz zum Energieaustausch mit dem Niedrigspannungsnetz verbunden sein.

Im Stand der Technik ist es bekannt, das Hochspannungsnetz (auch als Hochspannungssystem bezeichenbar) zentral anzusteuern. Soll beispielsweise das Hochspannungssystem deaktiviert, das bedeutet spannungsfrei geschaltet, werden, sind die verschiedenen Komponenten des Hochspannungsnetzes in einer definierten Reihenfolge auszuschalten. Das gleiche gilt für die Inbetriebnahme des Hochspannungsnetzes. Dabei können beispielsweise gezielt Schütze und/oder sonstige Schalter des Hochspannungsnetzes angesteuert werden. Die Steuerung des Hochspannungsnetzes wird dabei meist durch eine Fahrzeugfunktion, die als "Hochvolt-Koordinator" bezeichnet werden kann, durchgeführt. Diese Fahrzeugfunktion kann als Software in einem zentralen Steuergerät (Gateway) umgesetzt werden, so dass davon gesprochen werden kann, dass das Steuergerät eine Hochspannungsnetzeinheit zur Steuerung des Betriebs des Hochspannungsnetzes aufweist.

Im Hinblick auf Hochspannungsnetze gelten besonders hohe Anforderungen hinsichtlich der Sicherheit, insbesondere dann, wenn die Spannung des Hochspannungsnetzes die Berührschutzspannung übersteigt. Daher werden Software- und Hardware-Komponenten solcher Hochspannungsnetzeinheiten in Steuergeräten nach hohen Sicherheitsstandards entwickelt, beispielsweise nach dem Standard ISO26262.

Trotz dieser auf Sicherheit bedachten Software/Hardware-Implementierung kann ein sogenannter Reset (kurzfristiger Ausfall) des Steuergerätes nicht vollständig ausgeschlossen werden. Bei einem solchen Reset des Steuergerätes wird auch die Fahrzeugfunktion, die das Hochspannungsnetz steuert, sofort beendet, mit anderen Worten die Hochspannungsnetzeinheit kurzfristig ausgeschaltet. Unmittelbar nach dem Reset wird das Steuergerät wieder aktiviert und während einer Initialisierungsphase werden die Funktionen wieder hergestellt, so dass auch die Fahrzeugfunktion zur Steuerung des Betriebs des Hochspannungsnetzes zu einer Neuinitialisierung gezwungen wird. Bei einer Neuinitialisierung wird aus Gründen der funktionalen Sicherheit üblicherweise zunächst eine Deaktivierung des Hochspannungsnetzes vorgenommen, das bedeutet, die Komponenten des Hochspannungsnetzes erhalten diese ausschaltende Steuerbefehle. Im Fall der Hochspannungsbatterie des Hochspannungsnetzes bedeutet dies, dass deren Schütze geöffnet werden, so dass das Hochspannungsnetz abgeschaltet wird.

Nach jedem Reset und der nachfolgenden Reaktivierung des Steuergerätes mit der Hochspannungsnetzeinheit wird folglich das gesamte Hochspannungsnetz abgeschaltet. Zwar wird das Hochspannungsnetz einen Augenblick später wieder aktiviert, doch der kurzfristige Ausfall kann zur Schädigung der Hochspannungsbatterie führen, nachdem Hochspannungs-Schützkontakte unter Strombelastung öffnen. Zudem ist ein derartiger kurzfristiger Ausfall des Hochspannungsnetzes durch eine Bedienperson des Kraftfahrzeugs wahrnehmbar und mithin ungewollt.

JP 2008-206 288 A betrifft eine Vorrichtung zur Fahrzeugsteuerung. Dort soll ein System-Hauptrelais (SMR) auch bei Reset einer CPU ununterbrochen weiterbetrieben werden, wozu eine Steuersignaleinheit mit einem Steuersignalhaltekreis und einem Kreis zur erzwungenen Unterbrechung des SMR-Betriebs verwendet wird.

DE 10 2012 018 338 A1 betrifft eine Vorrichtung zur Deaktivierung von Hochvoltkomponenten in einem Kraftfahrzeug. Nach Detektion einer Erschütterung sollen Hochvoltkomponenten auf Fehler analysiert werden und im Fehlerfall deaktiviert werden.

Der Erfindung liegt daher die Aufgabe zugrunde, die Robustheit und Verfügbarkeit des Hochspannungsnetzes in Kraftfahrzeugen, insbesondere Kraftfahrzeugen mit einem Elektromotor, zu erhöhen.

Zur Lösung dieser Aufgabe ist bei einem Verfahren der eingangs genannten Art erfindungsgemäß vorgesehen, dass bei einem Neustart des Steuergeräts nach einem Reset des Steuergeräts die Art des Resets überprüft wird, wobei bei einem von innerhalb des Steuergeräts ausgelösten Reset bei einem eine Übereinstimmung anzeigenden, in einer Initialisierungsphase der Hochspannungsnetzeinheit durchgeführten Vergleich zwischen einem gespeicherten Zustand des Hochspannungsnetzes vor dem Reset und einem aktuellen Zustand des Hochspannungsnetzes der Betrieb der Hochspannungsnetzeinheit für den übereinstimmenden Zustand ohne ein Abschalten des Hochspannungsnetzes wieder aufgenommen wird.

Grundsätzlich ist davon auszugehen, dass ein Reset im Steuergerät niemals mit absoluter Sicherheit verhindert werden kann. Daher zielt die Erfindung darauf ab, die in dem Steuergerät integrierte Funktion zur Steuerung des Betriebs des Hochspannungssystems nach einem Reset robuster gegen die Auswirkungen eines Resets zu machen. Nach einem Reset startet das Steuergerät in der Initialisierungsphase seine Initialisierung, um den regulären Rechenbetrieb wieder herzustellen. In dieser Initialisierungsphase wird nun erfindungsgemäß zunächst differenziert, ob der Reset durch äußere Einflüsse, beispielsweise einen Spannungseinbruch an der 12V-Versorgung des Steuergerätes bei einem Kraftfahrzeug-Startvorgang oder dergleichen, oder durch ein internes Ereignis verursacht wurde. Beispielsweise kann ein Steuergerät eine Überwachungseinheit aufweisen, die einen kurzfristigen Stopp der sonstigen Recheneinheiten auslösen kann, beispielsweise wenn interne Fehler oder dergleichen auftreten. Es ist also denkbar, dass ein innerhalb des Steuergeräts ausgelöster Reset (interner Reset) durch eine Überwachungseinheit des Steuergeräts ausgelöst wird. Die Resetinformation, die beschreibt, ob es sich um einen durch äußere Einflüsse ausgelösten Reset oder einen internen Reset handelt, wird in der Initialisierungsphase der Hochspannungsnetzeinheit genutzt, um einen zweistufigen Erkennungsalgorithmus zu aktivieren. Nur nach der Erkennung eines internen Resets versucht die Hochspannungsnetzeinheit den letzten gültigen Zustand des Hochspannungsnetzes zu rekonstruieren. Nur dadurch ist es möglich, dass die Fahrzeugfunktion zur Steuerung des Betriebs des Hochspannungsnetzes weiterhin den letzten Modus vor dem internen Reset weiter kommandieren kann, so dass ein Ausfall des Hochspannungsnetzes verhindert werden kann.

Dabei sei an dieser Stelle noch angemerkt, dass auf verschiedene Art und Weise detektiert werden kann, ob ein interner Reset oder ein durch äußere Einflüsse ausgelöster Reset vorlag. Beispielsweise können hierfür bestimmte temporäre Bits in einer Speichereinrichtung gesetzt werden; erkennen lässt sich ein interner Reset oft aber auch dadurch, dass bestimmte Komponenten des Steuergeräts, beispielsweise die Überwachungseinheit, weiter bestromt und aktiv geblieben sind. Es sind daher eine Vielzahl von Möglichkeiten denkbar, zwischen einem internen Reset und einem durch äußere Einflüsse ausgelösten Reset zu unterscheiden.

Um eine möglichst große Sicherheit zu erreichen, ist der Erkennungsalgorithmus, mit dem der letzte gültige Zustand des Hochspannungsnetzes rekonstruiert werden soll, zweistufig aufgebaut. Zum einen wird im Rahmen der üblichen Funktion der Hochspannungsnetzeinheit grundsätzlich der Zustand des Hochspannungsnetzes abgespeichert und dies stetig mitgeführt, so dass durch Abrufen dieses gespeicherten Zustands festgestellt werden kann, in welchem Zustand sich das Hochspannungsnetz vor dem Reset befunden hat. Die zweite Stufe des Erkennungsalgorithmus erkennt den aktuellen Zustand des Hochspannungsnetzes, insbesondere anhand entsprechender von den Komponenten des Hochspannungsnetzes gelieferter Zustandsinformationen. Durch diese zwei unabhängigen Erkennungsarten kann der Erkennungsalgorithmus als Ganzes aus Sicht funktionaler Fahrzeugsicherheit freigegeben werden. Nur wenn beide Stufen des Erkennungsalgorithmus zum gleichen Ergebnis kommen, mithin der Zustand des Hochspannungsnetzes vor dem Reset mit dem aktuellen Zustand des Hochspannungsnetzes übereinstimmt, kann die Initialisierungsphase der Hochspannungsnetzeinheit dadurch abgeschlossen werden, dass wieder der Betrieb von vor dem Reset fortgesetzt wird.

Auf diese Weise wird erreicht, dass ein Reset eines Steuergerätes nicht immer zum Ausfall des gesamten Hochspannungsnetzes führt, so dass sich die Robustheit und Verfügbarkeit des Hochspannungsnetzes auf eine sichere Art und Weise erhöht.

Dabei kann vorgesehen sein, dass bei nicht übereinstimmenden Zuständen während des Vergleichs und/oder einem nicht innerhalb des Steuergeräts ausgelösten Reset eine Deaktivierung des Hochspannungsnetzes vor einer weiteren Steuertätigkeit der Hochspannungsnetzeinheit durchgeführt wird.

Das bedeutet, wenn kein interner Reset vorliegt und/oder wenn der Vergleich der Zustände des Hochspannungsnetzes nicht erfolgreich ist, wird die Fahrzeugfunktion zur Steuerung des Betriebs des Hochspannungsnetzes regulär, also wie grundsätzlich bekannt, gestartet, und fordert von allen Komponenten des Hochspannungsnetzes zunächst den Modus "aus" an. Dies führt dazu, dass das Hochspannungsnetz zunächst abgeschaltet wird. In den nächsten Schritten wird dann eine Aktivierung des Hochspannungsnetzes geprüft und gegebenenfalls durchgeführt.

Zweckmäßigerweise wird der Zustand des Hochspannungsnetzes vor dem Reset als während des Betriebs der Hochspannungsnetzeinheit ständig aktuell gehaltenes Zustandsdatum gespeichert. Der reguläre Rechenbetrieb der Hochspannungsnetzeinheit des Steuergerätes sieht also vor, den aktuellen Zustand des Hochspannungsnetzes in Form eines Zustandsdatums darzustellen. Zweckmäßigerweise kann als Zustandsdatum ein Acht-Bit-Datum verwendet werden, mithin eine Zahl von 0 bis 255, welches Zustandsdatum in einer Speichereinrichtung des Steuergeräts abgelegt wird. Für das Zustandsdatum können bestimmte Werte fest bestimmten Zuständen zugeordnet werden, beispielsweise für ein Acht-Bit-Datum als 0 = Hochspannungsnetz ausgeschaltet; ... 10 = Hochspannungsnetz im Idle-Modus; ....

Eine besonders zweckmäßige Ausgestaltung in diesem Zusammenhang sieht vor, dass ein festgelegter Wert des Zustandsdatums für einen nicht bestimmten Zustand des Hochspannungsnetzes verwendet wird, wobei dann, wenn bei dem Vergleich der festgelegte Wert des Zustandsdatums festgestellt wird, der Vergleich als fehlgeschlagen gilt. Wird im oben genannten Beispiel eines Acht-Bit-Zustandsdatums beispielsweise als festgelegter Wert 255 verwendet, wird immer dann, wenn in der Initialisierungsphase des Steuergeräts festgestellt wird, dass das Zustandsdatum den Wert 255 enthält, die Zustandserkennung sofort beendet und es folgt der reguläre Start der Fahrzeugfunktion zur Steuerung des Betriebs des Hochspannungsnetzes, mithin zunächst das Deaktivieren des Hochspannungsnetzes und sodann die Überprüfung, ob es wieder aktiviert werden soll. Der Wert "255" ist also eine Art "Fehlerwert".

Vorzugsweise kann der Zustand des Hochspannungsnetzes vor dem Reset in einer flüchtigen Speichereinrichtung des Steuergeräts gespeichert werden, die bei einem innerhalb des Steuergeräts ausgelösten Reset weiter mit Spannung versorgt wird, insbesondere einer sRAM-Speichereinrichtung. Der Zustand, insbesondere das Zustandsdatum, wird mithin in einem Speicherbereich des Steuergeräts abgelegt, welcher bei einem internen Reset weiterhin mit Spannung versorgt wird. Solche Speichereinrichtungen werden häufig als sRAM bezeichnet. Hierdurch bleibt das Zustandsdatum in diesem speziellen RAM-Bereich, also der Speichereinrichtung, nach einem internen Reset erhalten. Dies gilt jedoch nicht für den externen Reset.

In diesem Zusammenhang sieht eine besonders vorteilhafte Weiterbildung der Erfindung vor, dass bei einer Unterbrechung der Stromversorgung der Speichereinrichtung das Zustandsdatum den festgelegten Wert annimmt, wenn ein festgelegter Wert des Zustandsdätums für einen nicht bestimmten Zustand des Hochspannungsnetzes verwendet wird. Auf diese Weise kann schnell erkannt werden, dass kein interner Reset vorlag und ein Vergleich nicht zweckmäßig ist, welcher bei anderen, einen Zustand des Hochspannungsnetzes zugeordneten Werten des Zustandsdatums in der Speichereinrichtung nach einer Unterbrechung der Stromversorgung der Speichereinrichtung gegebenenfalls noch durchgeführt würde.

Eine Weiterbildung des erfindungsgemäßen Verfahrens sieht vor, dass der aktuelle Zustand des Hochspannungsnetzes aus von Komponenten des Hochspannungsnetzes über eine Kommunikationsverbindung, insbesondere ein Bussystem, an das Steuergerät übertragenen Zustandsinformationen ermittelt wird. Dabei versteht es sich von selbst, dass dann, wenn der Zustand des Hochspannungsnetzes vor dem Reset als ein Zustandsdatum gespeichert wird, zweckmäßigerweise der aktuelle Zustand im selben Format ermittelt wird, so dass ein unmittelbarer Vergleich erfolgen kann. Der aktuelle Zustand des Hochspannungssystems wird nun anhand der aktuellen Modi der Komponenten des Hochspannungsnetzes erkannt, die durch eine Zustandsinformation beschrieben insbesondere über ein Bussystem an das Steuergerät übertragen werden. Ein solches Bussystem wird üblicherweise ohnehin genutzt, nachdem die Kommandierung des notwendigen Modus, also die Steuerbefehle, von der Fahrzeugfunktion zur Steuerung des Betriebs des Hochspannungsnetzes zu den Komponenten des Hochspannungsnetzes ohnehin über ein solches Bussystem, beispielsweise einen CAN-Bus oder einen FlexRay-Bus, erfolgt. Aus Gründen der funktionalen Fahrzeugsicherheit ist es bekannt, diese Bussignale während der Übertragung mit einer Prüfsumme zu versehen. Damit seitens des Steuergeräts der Ist-Modus der Komponenten des Hochspannungsnetzes verifiziert werden kann, senden die Komponenten des Hochspannungsnetzes ihrerseits den aktuellen Modus als Zustandsinformation über das Bussystem an das Steuergerät, konkret die Hochspannungsnetzeinheit. Es kann vorgesehen sein, dass auch die Zustandsinformationen mit einer Prüfsumme übermittelt werden. Alle empfangenen Signale der Komponenten des Hochspannungsnetzes werden zweckmäßigerweise vor einer inhaltlichen Nutzung hinsichtlich ihrer Integrität überprüft, wobei nicht zwangsläufig nur die Prüfsumme überprüft wird, sondern auch vorgesehen sein kann, dass vor einer Weiterverarbeitung von Signalen der Komponenten des Hochspannungsnetzes, insbesondere also auch der Zustandsinformation, wenigstens zwei übereinstimmende Signale, insbesondere Zustandsinformationen, in aufeinanderfolgenden Übertragungen während einer Überprüfungszeit vorliegen müssen. Die Zustandsinformationen werden also zweckmäßigerweise zyklisch übertragen, wobei wenigstens zwei aufeinanderfolgend übersandte Zustandsinformationen übereinstimmen müssen, bevor eine inhaltliche Nutzung in der Hochspannungsnetzeinheit stattfindet.

Im Rahmen der vorliegenden Erfindung ist es allerdings gewünscht, dass die Erkennung des aktuellen Zustands des Hochspannungsnetzes anhand der Zustandsinformationen innerhalb der Dauer der Initialisierungsphase des Steuergeräts abzuschließen ist. Bei heutigen Steuergeräten liegt die maximal nutzbare Zeit etwa bei ca. 100 bis 150 ms. Als problematisch kann sich hierbei die Sicherheitsüberprüfung der Zustandsinformationen erweisen, insbesondere dann, wenn mehrere aufeinanderfolgende Zustandsinformationen übereinstimmen müssen. Bei einer regulären Sendezykluszeit der Zustandsinformationen von 100 ms führt dies erst nach ca. 300 bis 400 ms zur Freigabe der Dateninhalte für die Ermittlung des aktuellen Zustands des Hochspannungsnetzes, insbesondere also durch den Erkennungsalgorithmus, wie er bereits beschrieben wurde. Diese Zeitdauer ist jedoch zu lange, um eine Zustandserkennung und den Vergleich innerhalb von 100 bis 150 ms während der Initialisierungsphase durchführen zu können.

Daher sieht eine besonders vorteilhafte Ausgestaltung der vorliegenden Erfindung vor, dass bei einer Überprüfungszeit, die länger ist als die Dauer der Initialisierungsphase, ein den Zyklus der Aussendung der Zustandsinformationen der Komponenten für die Dauer der Initialisierungsphase derart verkürzendes Beschleunigungssignal an die Komponenten gesendet wird, dass die Überprüfungszeit unter Verwendung des neuen Zyklus kürzer als die Dauer der Initialisierungsphase ist. Es ist also denkbar, dass nach einem internen Reset zunächst ein definiertes Bussignal, das Beschleunigungssignal, in der Initialisierungsphase ausgesendet wird, welches eine geringere Sendezykluszeit enthält und von den Komponenten des Hochspannungsnetzes empfangen wird. Im oben dargelegten Zahlenbeispiel könnte die niedrigere Sendezykluszeit beispielsweise etwa 10 ms übertragen, so dass die Zustandsinformation von allen Komponenten des Hochspannungsnetzes schneller gesendet und dadurch schneller im Steuergerät als gültig erkannt wird, beispielsweise etwa in 30 bis 40 ms. So wird es ermöglicht, auch während der Initialisierungsphase alle Ist-Modi der Komponenten des Hochspannungsnetzes schnell genug auszuwerten und daraus einen aktuellen, gültigen Zustand des Hochspannungsnetzes zu erkennen.

Es kann ferner vorgesehen sein, dass bei keinem erkennbaren gültigen aktuellen Zustand des Hochspannungsnetzes und/oder einer empfangenen Fehlermeldung einer Komponente des Hochspannungsnetzes der Vergleich als gescheitert angesehen wird. Kann also kein aktueller, gültiger Zustand des Hochspannungsnetzes erkannt werden oder meldet eine Komponente des Hochspannungsnetzes einen Fehler, wird der Erkennungsalgorithmus abgebrochen und die Fahrzeugfunktion zur Steuerung des Betriebs des Hochspannungsnetzes startet auf reguläre Art und Weise, mithin, indem zunächst das Hochspannungsnetz abgeschaltet und sodann eine erneute Aktivierung überprüft wird.

Neben dem Verfahren betrifft die Erfindung auch ein Kraftfahrzeug mit einem eine höhere Spannung als ein Niedrigspannungsnetz aufweisenden Hochspannungsnetz und einem eine Hochspannungsnetzeinheit zur Steuerung des Betriebs des Hochspannungsnetzes aufweisenden Steuergerät, das zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, so dass auch mit diesem die Vorteile der Erfindung erhalten werden können.

Dabei kann es sich insbesondere um ein Kraftfahrzeug mit einem Elektromotor handeln, wobei der Elektromotor dann eine Komponente des Hochspannungsnetzes darstellt. Das Hochspannungsnetz umfasst üblicherweise auch wenigstens eine Hochspannungsbatterie zu dessen Versorgung. Sonstige Komponenten des Hochspannungsnetzes können Leistungselektronikkomponenten, beispielsweise einen Umrichter zur Verbindung mit dem Niedrigspannungsnetz, und andere Hochspannungsverbraucher als den Elektromotor umfassen. Das erfindungsgemäße Kraftfahrzeug kann also insbesondere ein Elektrokraftfahrzeug oder ein Hybridkraftfahrzeug sein.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan des erfindungsgemäßen Verfahrens,
- Fig. 2: eine Prinzipskizze eines erfindungsgemäßen Kraftfahrzeugs, und
- Fig. 3: eine Prinzipskizze eines Steuergeräts.

Im Folgenden soll nun ein Betriebsverfahren für ein Hochspannungsnetz in einem Kraftfahrzeug dargestellt werden, welches unter bestimmten Umständen einen Ausfall des Hochspannungsnetzes durch einen Reset des Steuergeräts, in dem durch eine Hochspannungsnetzeinheit die Steuerung des Hochspannungsnetzes durchgeführt wird, vermeiden kann. Das Hochspannungsnetz umfasst dabei eine Mehrzahl von Komponenten, die wenigstens in den Modi "an" und "aus" betrieben werden können. Es sind auch andere Modi denkbar. Komponenten des Hochspannungsnetzes können eine Hochspannungsbatterie, einen Elektromotor, Verbraucher und Leistungselektronikkomponenten sein. Unter dem Modus "aus" einer Hochspannungsbatterie ist dabei ein Zustand zu verstehen, in dem die Hochspannungsbatterie durch geöffnete Schütze vom restlichen Hochspannungsnetz getrennt ist.

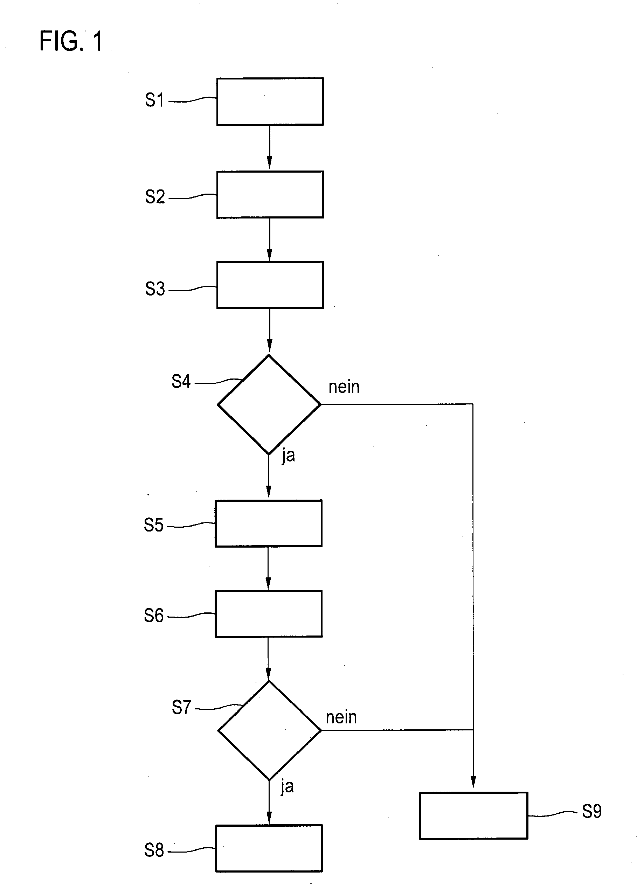

Fig. 1 zeigt nun einen Ablaufplan eines Ausführungsbeispiels des erfindungsgemäßen Verfahrens. In einem Schritt S1 findet der übliche Betrieb der Hochspannungsnetzeinheit in dem Steuergerät statt, wobei der aktuelle Zustand des Hochspannungsnetzes immer nachgeführt in einer Speichereinrichtung des Steuergeräts festgehalten wird. Der aktuelle Zustand des Hochspannungsnetzes wird durch ein Zustandsdatum beschrieben, hier ein Acht-Bit-Datum, mithin eine Zahl von 0 bis 255. Verschiedenen Werten des Zusatzdatums sind verschiedene gültige Zustände des Hochspannungsnetzes zugeordnet, beispielsweise 0 = Hochspannungsnetz abgeschaltet, 10 = Hochspannungsnetz in Idle-Modus und dergleichen. Ein festgelegter Wert, hier 255, steht für einen nicht bestimmten Zustand des Hochspannungsnetzes und kann beispielsweise in Fehlerfällen verwendet werden.

Die Speichereinrichtung ist eine nicht flüchtige Speichereinrichtung, die bei einem internen Reset des Steuergeräts weiterhin mit Strom versorgt wird, mithin ihre Daten nicht verliert. Eine solche Speichereinrichtung wird auch als sRAM-Speichereinrichtung bezeichnet. Es ist vorgesehen, dass nach einer Unterbrechung der Stromversorgung der Speichereinrichtung diese im Speicherbereich des Zustandsdatums den festgelegten Wert, in diesem Beispiel 255, enthält.

Im Schritt S2 tritt ein Reset des Steuergerätes auf. Das bedeutet, die Hauptrecheneinheiten des Steuergeräts werden für kurze Zeit nicht mit Strom versorgt, so dass die durch das Steuergerät realisierten Funktionen zunächst ausfallen. Dabei kann es sich um einen durch äußere Einflüsse entstandenen Reset handeln, beispielsweise aufgrund eines Spannungsabfalls in der Stromversorgung des Steuergeräts, insbesondere beim Starten des Kraftfahrzeugs, oder aber um einen internen Reset, der beispielsweise im Fehlerfall von einer Überwachungseinheit des Steuergeräts ausgelöst sein kann.

In einem Schritt S3 findet nach dem Reset ein Neustart des Steuergeräts beziehungsweise seiner Hauptrecheneinheiten, also auch der Hochspannungsnetzeinheit, statt. Die nun beginnende Phase kann auch als Initialisierungsphase bezeichnet werden; gezeigt werden nur die für die Fahrzeugfunktion zur Steuerung des Betriebs des Hochspannungsnetzes relevanten Vorgänge.

Diesbezüglich wird in einem Schritt S4 zunächst überprüft, ob es sich um einen internen Reset gehandelt hat. Dies kann beispielsweise anhand einer diesbezüglich abgelegten Information der Überwachungseinheit oder dergleichen festgestellt werden. Trifft dies nicht zu, ist der Reset also durch einen äußeren Einfluss entstanden, wird unmittelbar mit dem Schritt S9 fortgefahren, in dem ein regulärer Neustart der Fahrzeugfunktion zur Steuerung des Betriebs des Hochspannungsnetzes stattfindet. Dabei werden zunächst zur Sicherheit alle Komponenten des Hochspannungsnetzes und mithin das Hochspannungsnetz selbst abgeschaltet, bevor überprüft wird, ob das Hochspannungsnetz wenigstens teilweise wieder aktiviert werden soll.

Wird jedoch festgestellt, dass ein interner Reset im Steuergerät vorlag, wird in den Schritten S5 und S6 mit einem zweistufigen Erkennungsalgorithmus fortgefahren. In einer ersten Stufe des Erkennungsalgorithmus wird versucht festzustellen, welcher Zustand des Hochspannungsnetzes vor dem Reset vorlag. Hierzu wird das Zustandsdatum aus der Speichereinrichtung ausgelesen, welches im Schritt S1 dort aktuell gehalten wurde. Ist der festgelegte Wert dort gespeichert, hier also 255, wird der Erkennungsalgorithmus aufgrund des nicht bestimmbaren Zustands sofort abgebrochen und es wird mit Schritt S9 fortgefahren (nicht näher dargestellt).

Im Schritt S6 soll der aktuelle Zustand des Hochspannungsnetzes ermittelt werden. Hierzu wird in der zweiten Stufe des Erkennungsalgorithmus oder bereits zuvor zunächst ein Beschleunigungssignal über das Bussystem, mit dem das Steuergerät mit den Komponenten des Hochspannungsnetzes kommuniziert, an die Komponenten des Hochspannungsnetzes gesendet, welches die Sendezykluszeit, in der die Komponenten des Hochspannungsnetzes ihre Zustandsinformationen senden, deutlich reduziert, beispielsweise auf 10 ms. Denn diese Zustandsinformationen, die den Modus der jeweiligen Komponenten des Hochspannungsnetzes enthalten, sind die Grundlage für die Erkennung des aktuellen, gültigen Zustands des Hochspannungsnetzes. Bevor eine empfangene Zusatzinformation jedoch ausgewertet werden kann, muss diese verifiziert werden, was zum einen durch eine Prüfsumme möglich ist, die mit der Zusatzinformation gesendet wird, zum anderen aber durch eine Überprüfung, ob eine bestimmte Anzahl von nacheinander eintreffenden Zustandsinformationen übereinstimmen. Erst nach dieser Überprüfung wird die Zustandsinformation für die Verarbeitung in der zweiten Stufe des Erkennungsalgorithmus freigegeben.

Die Verkürzung der Sendezykluszeit ermöglicht es nun, die vollständigen Zustandsinformationen auch während der beispielsweise 100 bis 150 ms andauernden Initialisierungsphase zu sammeln. Spätestens nach der Initialisierungsphase wird die Sendezykluszeit wieder auf den Normalwert zurückgesetzt.

Lässt sich aus den Zustandsinformationen kein endgültiger Zustand des Hochspannungsnetzes ableiten oder sendet eine Komponente des Hochspannungsnetzes einen Fehler, so wird wiederum mit Schritt S9 und dem regulären Start der Fahrzeugfunktion zur Steuerung des Betriebs des Hochspannungsnetzes fortgefahren (nicht näher dargestellt). Ansonsten liegt nun ein weiteres Zustandsdatum vor, welches den aktuellen Zustand des Hochspannungsnetzes beschreibt.

In einem Schritt S7 wird der Zustand des Hochspannungsnetzes vor dem Reset mit dem aktuellen Zustand des Hochspannungsnetzes verglichen, indem die jeweiligen Zustandsdaten verglichen werden. Stimmen diese nicht überein, wird wiederum mit Schritt S9 und dem regulären Start der Fahrzeugfunktion zur Steuerung des Betriebs des Hochspannungsnetzes fortgefahren.

Liegt jedoch eine Übereinstimmung vor, wird in einem Schritt S8 der Betrieb der Hochspannungsnetzeinheit, also die Fahrzeugfunktion zur Steuerung des Betriebs des Hochspannungsnetzes, für den übereinstimmenden Zustand unmittelbar wieder aufgenommen, ohne dass ein Abschalten des Hochspannungsnetzes nötig wäre, wie dies in Schritt S9 der Fall ist. Mithin wird ein Ausfall des Hochspannungsnetzes vermieden.

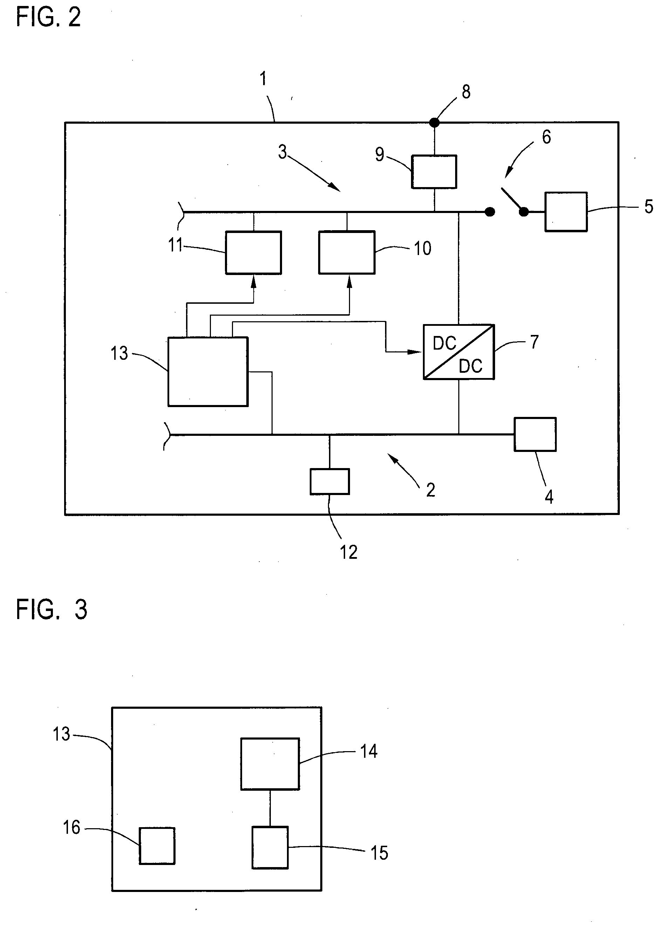

Fig. 2 zeigt eine Prinzipskizze eines erfindungsgemäßen Kraftfahrzeugs 1. Dieses weist zwei verschiedene Bordnetze auf, nämlich ein Niedrigspannungsnetz 2 und ein Hochspannungsnetz 3, wobei die Spannung des Hochspannungsnetzes 3 höher als die des Niedrigspannungsnetzes 2 ist. Das Niedrigspannungsnetz wird von einer Niedrigspannungsbatterie 4, beispielsweise einer üblichen 12V-Fahrzeugbatterie, gespeist, das Hochspannungsnetz durch eine Hochspannungsbatterie 5, welche über Schütze 6 von dem übrigen Hochspannungsnetz 3 getrennt werden kann.

Das Hochspannungsnetz 3 und das Niedrigspannungsnetz 2 sind über einen Gleichspannungswandler 7 (DC-DC-Wandler) beziehungsweise Umrichter aneinandergekoppelt, so dass beispielsweise die Niedrigspannungsbatterie 4 aus dem Hochspannungsnetz 3 geladen werden kann und dergleichen.

Das Kraftfahrzeug 1 umfasst ferner einen einem Ladeanschluss 8 zugeordneten Umrichter 9, über den eine Wechselspannung in eine Gleichspannung zum Laden der Hochspannungsbatterie 5 umgewandelt werden kann.

Teil des Hochspannungsnetzes 3 ist ferner ein Elektromotor 10, der sowohl im generatorischen als auch im motorischen Betrieb betreibbar ist. Bei dem Kraftfahrzeug 1 handelt es sich mithin um ein Elektrokraftfahrzeug.

Ein weiterer Hochspannungsverbraucher 11, beispielsweise ein Klimakompressor, ist ebenso als Teil des Hochspannungsnetzes 3 gezeigt, während ein Niedrigspannungsverbraucher 12 ebenso beispielhaft dargestellt ist.

Durch elektrische Energie aus dem Niedrigspannungsnetz 2 betrieben ist ferner ein Steuergerät 13 vorgesehen, über das auch die Steuerung des Hochspannungsnetzes 3 erfolgt, wie der Übersichtlichkeit halber nur für die Komponenten 7, 10 und 11 gezeigt ist; selbstverständlich lassen sich auch die weiteren Komponenten 5, 6 und 9 des Hochspannungsnetzes 3 durch das Steuergerät 13 ansteuern, wozu vorliegend ein Bussystem des Kraftfahrzeugs 1 verwendet wird.

Das Steuergerät 13 ist zur Durchführung des erfindungsgemäßen Verfahrens ausgebildet und in Fig. 3 genauer dargestellt, wobei der Übersichtlichkeit halber nicht alle Komponenten des Steuergeräts 13 gezeigt sind. Zur Realisierung der Fahrzeugfunktion zur Steuerung des Betriebs des Hochspannungsnetzes 3 umfasst das Steuergerät 13 zunächst eine Hochspannungsnetzeinheit 14, die sowohl Hardware- wie auch Software-Komponenten enthalten kann. Die Hochspannungsnetzeinheit 14 hat Zugriff auf eine nicht flüchtige Speichereinrichtung 15, in der das Zustandsdatum wie bezüglich des Verfahrens beschrieben abgelegt werden kann. Eine Überwachungseinheit 16 kann bei internen Fehlern oder sonstigen vorbestimmten internen Ereignissen einen internen Reset des Steuergeräts 13 anstoßen, bei dem allerdings die Überwachungseinheit 16 und die Speichereinrichtung 15 weiterhin mit Strom versorgt werden.

## Patentansprüche

1. Verfahren zum Betrieb eines eine höhere Spannung als ein Niedrigspannungsnetz (2) aufweisenden Hochspannungsnetzes (3) eines Kraftfahrzeugs (1), wobei eine Hochspannungsnetzeinheit (14) eines Steuergerätes (13) des Kraftfahrzeugs (1) verwendet wird, wobei die Hochspannungsnetzeinheit (14) zur Steuerung des Betriebs des Hochspannungsnetzes (3) vorgesehen ist,
**dadurch gekennzeichnet,**
**dass** bei einem Neustart des Steuergeräts (13) nach einem Reset des Steuergeräts (13) die Art des Resets überprüft wird, wobei bei einem von innerhalb des Steuergeräts (13) ausgelösten Reset bei einem eine Übereinstimmung anzeigenden, in einer Initialisierungsphase der Hochspannungsnetzeinheit (14) durchgeführten Vergleich zwischen einem gespeicherten Zustand des Hochspannungsnetzes (3) vor dem Reset und einem aktuellen Zustand des Hochspannungsnetzes (3) der Betrieb der Hochspannungsnetzeinheit (14) für den übereinstimmenden Zustand ohne ein Abschalten des Hochspannungsnetzes (3) wieder aufgenommen wird.

2. Verfahren nach Anspruch 1,
**dadurch gekennzeichnet,**
**dass** bei nicht übereinstimmenden Zuständen während des Vergleichs und/oder einem nicht innerhalb des Steuergeräts (13) ausgelösten Reset eine Deaktivierung des Hochspannungsnetzes (3) vor einer weiteren Steuertätigkeit der Hochspannungsnetzeinheit (14) durchgeführt wird.

3. Verfahren nach Anspruch 1 oder 2,
**dadurch gekennzeichnet,**
**dass** der Zustand des Hochspannungsnetzes (3) vor dem Reset als während des Betriebs der Hochspannungsnetzeinheit (14) ständig aktuell gehaltenes Zustandsdatum gespeichert wird.

4. Verfahren nach Anspruch 3,
**dadurch gekennzeichnet,**
**dass** als Zustandsdatum ein Acht-Bit-Datum verwendet wird.

5. Verfahren nach Anspruch 3 oder 4,
**dadurch gekennzeichnet,**
**dass** ein festgelegter Wert des Zustandsdatums für einen nichtbestimmten Zustand des Hochspannungsnetzes (3) verwendet wird, wobei dann, wenn vor Vergleich der festgelegte Wert des Zustandsdatums festgestellt wird, der Vergleich als fehlgeschlagen gilt.

6. Verfahren nach einem der vorangehenden Ansprüche,
**dadurch gekennzeichnet,**
**dass** der Zustand des Hochspannungsnetzes (3) vor dem Reset in einer flüchtigen Speichereinrichtung (15) des Steuergeräts (13) gespeichert wird, die bei einem innerhalb des Steuergeräts (13) ausgelösten Reset weiter mit Spannung versorgt wird, insbesondere einer sRAM-Speichereinrichtung (15).

7. Verfahren nach Anspruch 6 in Verbindung mit Anspruch 5,
**dadurch gekennzeichnet,**
**dass** bei einer Unterbrechung der Stromversorgung der Speichereinrichtung (15) das Zustandsdatum den festgelegten Wert annimmt.

8. Verfahren nach einem der vorangehenden Ansprüche,
**dadurch gekennzeichnet,**
**dass** der aktuelle Zustand des Hochspannungsnetzes (3) aus von Komponenten des Hochspannungsnetzes (3) über eine Kommunikationsverbindung, insbesondere ein Bussystem, an das Steuergerät (13) übertragenen Zustandsinformationen ermittelt wird.

9. Verfahren nach Anspruch 8,
**dadurch gekennzeichnet,**
**dass** die Zustandsinformationen mit einer Prüfsumme übermittelt werden und/oder vor einer Weiterverarbeitung der Zustandsinformationen wenigstens zwei übereinstimmende Zustandsinformationen in aufeinanderfolgenden Übertragungen während einer Überprüfungszeit vorliegen müssen.

10. Verfahren nach Anspruch 9,
**dadurch gekennzeichnet,**
**dass** bei einer Überprüfungszeit, die länger ist als die Dauer der Initialisierungsphase, ein den Zyklus der Aussendung der Zustandsinformationen der Komponenten für die Dauer der Initialisierungsphase derart verkürzendes Beschleunigungssignal an die Komponenten gesendet wird, dass die Überprüfungszeit unter Verwendung des neuen Zyklus kürzer als die Dauer der Initialisierungsphase ist.

11. Verfahren nach einem der vorangehenden Ansprüche,
**dadurch gekennzeichnet,**
**dass** bei keinem erkennbaren gültigen aktuellen Zustand des Hochspannungsnetzes (3) und/oder einer empfangenen Fehlermeldung einer Komponente des Hochspannungsnetzes (3) der Vergleich als gescheitert angesehen wird.

12. Verfahren nach einem der vorangehenden Ansprüche,
**dadurch gekennzeichnet,**
**dass** ein innerhalb des Steuergeräts (13) ausgelöster Reset durch eine Überwachungseinheit (16) des Steuergeräts (13) ausgelöst wird.

13. Kraftfahrzeug (1) mit einem eine höhere Spannung als ein Niedrigspannungsnetz (2) aufweisenden Hochspannungsnetz (3) und einem eine Hochspannungsnetzeinheit (14) zur Steuerung des Betriebs des Hochspannungsnetzes (3) aufweisenden Steuergerät (13), das zur Durchführung eines Verfahrens nach einem der vorangehenden Ansprüche ausgebildet ist.

## Claims

1. Method for operating a high-voltage network (3) of a motor vehicle (1) comprising a higher voltage than a low-voltage network (2), wherein a high-voltage network unit (14) of a control device (13) of the motor vehicle (1) is used, wherein the high-voltage network unit (14) is provided to control the operation of the high-voltage network (3),
**characterised in that**
upon restarting the control device (13) following a reset of said control device (13), the type of reset is verified, wherein in the case of a reset triggered from inside the control device (13), with a comparison between a stored status of the high-voltage network (3) prior to the reset and a current status of the high-voltage network (3) which shows a concordance and which is carried out in an initialisation phase of the high-voltage network unit (14), the operation of the high-voltage network unit (14) is once again resumed for the concordant status without switching off the high-voltage network (3).

2. Method according to claim 1,
**characterised in that**
a deactivation of the high-voltage network (3) is carried out prior to an additional control activity of the high-voltage network unit (14) in the case of non-concordant statuses during the comparison and/or a reset not triggered inside the control device (13).

3. Method according to claim 1 or 2,
**characterised in that**
the status of the high-voltage network (3) prior to the reset is stored as a status date which is constantly kept up to date during the operation of the high-voltage network unit (14).

4. Method according to claim 3,
**characterised in that**
an eight-bit date is used as the status date.

5. Method according to claim 3 or 4,
**characterised in that**
a set value of the status date is used for an indefinite status of the high-voltage network (3), wherein when the set value of the status date is determined prior to the comparison, the comparison is then considered as failed.

6. Method according to any one of the preceding claims,
**characterised in that**
the status of the high-voltage network (3) prior to the reset is stored in a volatile memory device (15) of the control device (13), which is further supplied with voltage in the case of a reset triggered inside the control device (13), in particular an sRAM memory device (15).

7. Method according to claim 6 in conjunction with claim 5,
**characterised in that**
the status date assumes the set value in the case of an interruption of the power supply of the memory device (15).

8. Method according to any one of the preceding claims,
**characterised in that**
the current state of the high-voltage network (3) is determined from status information transferred to the control device (13) by components of the high-voltage network (3) via a communication connection, in particular a bus system.

9. Method according to claim 8,
**characterised in that**
the status information is transmitted with a checksum and/or prior to processing the status information at least two concordant status information items have to be present in consecutive transfers during a verification time.

10. Method according to claim 9,
**characterised in that**
in the case of a verification time that is longer than the duration of the initialisation phase, an acceleration signal shortening the cycle of the sending of the status information of the components for the duration of the initialisation phase is sent to the components such that the verification time using the new cycle is shorter than the duration of the initialisation phase.

11. Method according to any one of the preceding claims,
**characterised in that**
the comparison is considered as failed in the case of no recognisable, valid, current status of the high-voltage network (3) and/or of a received error message of a component of the high-voltage network (3).

12. Method according to any one of the preceding claims,
**characterised in that**
a reset triggered inside the control device (13) is triggered by a monitoring unit (16) of the control device (13).

13. Motor vehicle (1) with a high-voltage network (3) comprising a higher voltage than a low-voltage network (2) and a control device (13) comprising a high-voltage network unit (14) for controlling the operation of the high-voltage network (3), said control device is configured for performing a method according to any one of the preceding claims.

## Revendications

1. Procédé de fonctionnement d'un réseau à haute tension (3), présentant une tension supérieure à celle d'un réseau à basse tension (2), d'un véhicule automobile (1), dans lequel on utilise une unité de réseau à haute tension (14) d'un appareil de commande (13) du véhicule automobile (1) et dans lequel l'unité de réseau à haute tension (14) est prévue pour la commande du fonctionnement du réseau à haute tension (3),
**caractérisé en ce que**, lors d'un redémarrage de l'appareil de commande (13) après une remise à l'état initial de l'appareil de commande (13), on vérifie le type de remise à l'état initial,
dans lequel, dans le cas d'une remise à l'état initial déclenchée de l'intérieur de l'appareil de commande (13), si une comparaison effectuée dans une phase d'initialisation de l'unité de réseau à haute tension (14) entre un état mémorisé du réseau à haute tension (3) avant la remise à l'état initial et un état actuel du réseau à haute tension (3) indique une coïncidence, le fonctionnement de l'unité de réseau à haute tension (14) pour l'état coïncidant est repris sans coupure du réseau à haute tension (3).

2. Procédé selon la revendication 1, **caractérisé en ce que**, si les états ne coïncident pas pendant la comparaison et/ou si la remise à l'état initial n'a pas été déclenchée à l'intérieur de l'appareil de commande (13), une désactivation du réseau à haute tension (3) est effectuée avant toute nouvelle opération de commande de l'unité de réseau à haute tension (14).

3. Procédé selon la revendication 1 ou 2, **caractérisé en ce que** l'état du réseau à haute tension (3) avant la remise à l'état initial est mémorisé en tant que donnée d'état maintenue constamment actuelle pendant le fonctionnement de l'unité de réseau à haute tension (14).

4. Procédé selon la revendication 3, **caractérisé en ce qu'**une donnée sur huit bits est utilisée comme donnée d'état.

5. Procédé selon la revendication 3 ou 4, **caractérisé en ce qu'**une valeur fixée de la donnée d'état est utilisée pour un état indéterminé du réseau à haute tension (3), la comparaison étant considérée comme ayant échoué lorsqu'on constate la présence de la valeur fixée de la donnée d'état avant la comparaison.

6. Procédé selon l'une quelconque des revendications précédentes, **caractérisé en ce que** l'état du réseau à haute tension (3) avant la remise à l'état initial est mémorisé dans un dispositif de mémorisation volatile (15) de l'appareil de commande (13), lequel dispositif de mémorisation est encore alimenté en tension lors d'une remise à l'état initial déclenchée à l'intérieur de l'appareil de commande (13), en particulier un dispositif de mémorisation sRAM (15).

7. Procédé selon la revendication 6 en relation avec la revendication 5, **caractérisé en ce que**, lors d'une coupure de l'alimentation en courant du dispositif de mémorisation (15), la donnée d'état prend la valeur fixée.

8. Procédé selon l'une quelconque des revendications précédentes, **caractérisé en ce que** l'état actuel du réseau à haute tension (3) est déterminé à partir d'informations d'état transmises par des composants du réseau à haute tension (3) à l'appareil de commande (13) par l'intermédiaire d'une liaison de communication, en particulier un système de bus.

9. Procédé selon la revendication 8, **caractérisé en ce que** les informations d'état sont transmises avec une somme de contrôle et/ou, avant la poursuite du traitement des informations d'état, au moins deux informations d'état qui coïncident doivent être présentes dans des transmissions successives pendant un temps de vérification.

10. Procédé selon la revendication 9, **caractérisé en ce que**, lors d'une phase de vérification qui est plus longue que la durée de la phase d'initialisation, un signal d'accélération réduisant le cycle de l'émission des informations d'état des composants pour la durée de la phase d'initialisation est émis vers les composants de telle sorte que le temps de vérification en utilisant le nouveau cycle est plus court que la durée de la phase d'initialisation.

11. Procédé selon l'une quelconque des revendications précédentes, **caractérisé en ce que**, si aucun état actuel valide du réseau à haute tension (3) n'a pu être reconnu et/ou si un message d'erreur d'un composant du réseau à haute tension (3) a été reçu, la comparaison est considérée comme ayant échoué.

12. Procédé selon l'une quelconque des revendications précédentes, **caractérisé en ce qu'**une remise à l'état initial déclenchée à l'intérieur de l'appareil de commande (13) est déclenchée par une unité de surveillance (16) de l'appareil de commande (13).

13. Véhicule automobile (1) avec un réseau à haute tension (3) présentant une tension supérieure à celle d'un réseau à basse tension (2) et avec un appareil de commande (13) qui comporte une unité de réseau à haute tension (14) destinée à la commande du fonctionnement du réseau à haute tension (3) et qui est conçu pour la mise en oeuvre d'un procédé selon l'une quelconque des revendications précédentes.
